(19) **Europäisches Patentamt European Patent Office Office européen des brevets**

(11) **EP 4 545 243 A1**

(12) **EUROPEAN PATENT APPLICATION**
published in accordance with Art. 153(4) EPC

(43) Date of publication:
**30.04.2025 Bulletin 2025/18**

(21) Application number: **23907450.3**

(22) Date of filing: **21.11.2023**

(51) International Patent Classification (IPC):
**B23K 35/30** $^{(2006.01)}$     **B23K 35/02** $^{(2006.01)}$
**B23K 9/29** $^{(2006.01)}$

(52) Cooperative Patent Classification (CPC):
**B23K 9/29; B23K 35/02; B23K 35/30**

(86) International application number:
**PCT/KR2023/018810**

(87) International publication number:
**WO 2024/136164 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2022 KR 20220181065**

(71) Applicant: **POSCO Co., Ltd**
**Pohang-si, Gyeongsangbuk-do 37859 (KR)**

(72) Inventor: **BAE, Gyu-Yeol**
**Incheon 21985 (KR)**

(74) Representative: **Nederlandsch Octrooibureau**
**P.O. Box 29720**
**2502 LS The Hague (NL)**

(54) **WELDING MEMBER, AND WIRE FOR GAS-SHIELDED ARC WELDING**

(57) The present invention relates to a welding member, and a wire for gas-shielded arc welding.

[Fig. 1]

EP 4 545 243 A1

**Description**

Technical Field

The present disclosure relates to a welding member and a wire for gas shielded arc welding, and more specifically, to a welding member and a wire for gas shielded arc wielding having excellent strength and toughness.

Background Art

Next-generation automobile lightweight chassis parts using Giga Steel with a tensile strength of over 980MPa have been developed. As the development of these ultra-high strength automobile lightweight chassis parts progresses, the development of a welding technology that can improve the characteristics of a weld zone, while ensuring economic feasibility, is an important issue.

Since existing ultra-high strength welding materials for automotive Giga Steel contain a large amount of relatively expensive Ni, rendering the same less economical, an increase in manufacturing costs is inevitable, and a microstructure and mechanical properties for Giga Steel thin plate welding metal may not be optimized.

In particular, in the case of a thin steel sheet with a thickness of 2.0 mm or less, there is a lack of accurate and detailed understanding of the phase transformation and microstructure development mechanisms of welding metal formed by melting and dilution of the welding material and base material.

(Patent Document 1) Japanese Patent Publication No. 2013-220431

Summary of Invention

Technical Problem

An aspect of the present disclosure is to provide a welding member and a wire for gas shielded arc welding.

Another aspect of the present disclosure is to effectively secure economic feasibility of welding members and welding materials, essential for manufacturing parts while securing excellent strength and toughness of welding metal for Giga Steel, mainly used in the automobile industry.

An object of the present disclosure is not limited to the above description. The object of the present disclosure will be understood from the entire content of the present specification, and a person skilled in the art to which the present disclosure pertains will understand an additional object of the present disclosure without difficulty.

Solution to Problem

According to an aspect of the present disclosure,

provided is a welding member, the welding member including a base material; and a weld zone,
wherein the weld zone includes, by weight: C: 0.05 to 0.16%, Si: 0.001 to 1.0%, Mn: 1.0 to 2.5%, Cr: 0.1 to 5.0%, Mo: 0.1 to 1.5%, P: 0.030% or less (excluding 0%), S: 0.030% or less (excluding 0%), Al: 0.20% or less (excluding 0%), Ni: 0.40% or less (excluding 0%), Ti: 0.10% or less (excluding 0%), Nb: 0.10% or less (excluding 0%), with a balance of Fe and other inevitable impurities, wherein the following relational expression 1 is satisfied,

$$[\text{Relational expression 1}]$$

$$0.15 \leq ([Ti]/[Nb])/t \leq 0.65$$

In relational expression 1 above, [Ti] and [Nb] are a weight percent content of each element in parentheses for the weld zone, and t is a thickness (mm) of the base material.

According to another aspect of the present disclosure,

provided is a wire for gas shielded arc welding, the wire for gas shielded arc welding including, by weight: C: 0.05 to 0.16%, Si: 0.001 to 0.2%, Mn: 1.0 to 2.5%, Cr: 0.4 to 6.0%, Mo: 0.10 to 0.65%, P: 0.030% or less (excluding 0%), S: 0.030% or less (excluding 0%), Al: 0.20% or less (excluding 0%), Ni: 0.40% or less (excluding 0%), Ti: 0.20% or less (excluding 0%), Nb : 0.10% or less (excluding 0%), with a balance of Fe and other inevitable impurities, wherein the following relational expression 3 is satisfied,

$$490 \le 732 - 202 \times [C] + 216 \times [Si] - 85 \times [Mn] - 37 \times [Ni] - 47 \times [Cr] - 39 \times [Mo] \le 520 \qquad \text{[Relational expression 3]}$$

In relational expression 3 above, [C], [Si], [Mn], [Ni], [Cr], and [Mo] are a weight percent content of each element in parentheses for the wire for gas shielded arc welding.

According to another aspect of the present disclosure,

an automotive part having the weld zone is provided.

Advantageous Effects of Invention

As set forth above, according to an aspect of the present disclosure, a welding member and a wire for gas shielded arc welding are provided.

According to another aspect of the present disclosure, economic feasibility of welding members and welding materials, essential for manufacturing parts while securing excellent strength and toughness of a welding metal for Giga Steel, mainly used in the automobile industry, may be effectively secured.

The various and beneficial advantages and effects of the present disclosure are not limited to the above-described content, and may be more easily understood through description of specific embodiments of the present disclosure.

Brief description of drawings

FIG. 1 is an Image Quality (IQ) and Inverse Pole Figure (IPF) photograph of Inventive Example 1 of the present disclosure observed with EBSD.

FIG. 2 is an Image Quality (IQ) and Inverse Pole Figure (IPF) photograph of Comparative Example 2 of the present disclosure observed with EBSD.

Best Mode for Invention

Hereinafter, embodiments of the present disclosure will be described. Various modifications may be performed to the following examples by those skilled in the art without departing from the scope of the present disclosure. The following examples are for understanding of the present disclosure, and the scope of the present disclosure should not be limited to the following examples, but should be determined by the claims described below as well as their equivalents.

Meanwhile, the terms used in this specification are for describing the present disclosure and are not intended to limit the present disclosure. In addition, as used herein, singular forms include plural forms unless the relevant definition clearly indicates the contrary.

The meaning of "including" used in the specification specifies a configuration and does not exclude the presence or addition of another configuration.

Unless otherwise defined, all terms, including technical and scientific terms, used in this specification have the same meaning as commonly understood by a person of ordinary skill in the technical field to which the present disclosure pertains. Terms defined in the dictionary are interpreted to have meanings consistent with related technical literature and current disclosure.

A welding member according to an embodiment of the present disclosure will be described. The welding member includes a base material and a weld zone. In this case, an alloy composition of the weld zone will be described first. A content of the alloy composition described below refers to % by weight.

Carbon (C): 0.05 to 0.16%

Carbon (C) is a major element which can lower a temperature at which transformation of acicular ferrite, bainite, and martensite is initiated through non-diffusion transformation as welding metal is continuously cooled in a high-temperature austenite phase during a solidification process. When the C content is less than 0.05%, not only does hardenability decrease, making it difficult to secure the sufficient strength of welding metal, but also a low-temperature transformation initiation temperature cannot be sufficiently lowered according to the above-mentioned principle, so an effect of offsetting tensile residual stress in the weld zone due to a low-temperature transformation expansion effect during a cooling process may be significantly reduced, and a high-angle grain boundary structure with a large azimuth angle difference between grains may not be formed. On the other hand, if the C content exceeds 0.16%, not only does viscosity of molten metal decrease, resulting in a poor bead shape, but it also hardens welding metal excessively, resulting in a decrease in toughness, and since the low-temperature transformation initiation temperature is excessively low, compressive stress due to low-temperature transformation may not be secured at a temperature around room temperature at which tensile residual stress in the weld zone reaches a maximum level, and a residual austenite phase, an untransformed phase, may increase in a final weld metal structure. Meanwhile, although not particularly limited, in terms of further improving the above-described effect, a lower limit of the C content may be 0.075%, or an upper limit of the C content may be 0.13%.

Silicon (Si): 0.001 to 1.0%

Silicon (Si) is an element promoting deoxidation of molten metal during arc welding (a deoxidizing element), and an element in advantageous in suppressing an occurrence of blowholes, and increasing a low-temperature transformation initiation temperature. If the Si content is less than 0.001%, a deoxidation effect may be insufficient and blowholes may easily occur, and the low-temperature transformation initiation temperature may be excessively low, which may reduce an effect of offsetting tensile residual stress in the weld zone. On the other hand, if the Si content exceeds 1.0%, a large amount of non-conductive slag may be generated, which may cause coating defects in the weld zone, and insufficient surface activation of the zone may be insufficient due to excessive deoxidation, which may reduce the penetrability of molten metal, and may also increase the low-temperature transformation initiation temperature, so that a sufficient compressive stress effect due to low-temperature transformation may not be obtained as the temperature increases. Meanwhile, although not particularly limited, in terms of further improving the above-described effect, a lower limit of the Si content may be 0.22%, or an upper limit of the Si content may be 0.80%.

Manganese (Mn): 1.0 to 2.5%

Manganese (Mn) is a deoxidizing element and is an element advantageous in suppressing an occurrence of blowholes by promoting deoxidation of molten metal during arc welding, and, like C, is an element reducing a low-temperature transformation initiation temperature. If the Mn content is less than 1.0%, a deoxidation effect may be insufficient, which may make it easy to occur blowholes and the low-temperature transformation initiation temperature may increase, so that a sufficient compressive stress effect due to the low-temperature transformation may not be obtained. On the other hand, if the Mn content exceeds 2.5%, the viscosity of molten metal becomes excessively high, so when a welding speed is high, molten metal cannot properly flow into a welded portion, so a humping bead may be formed so that it is easy to occur bead shape defects, and the low-temperature transformation initiation temperature may be too low, thereby reducing the effect of offsetting the tensile residual stress in the weld zone. Meanwhile, although not particularly limited, in terms of further improving the above-described effect, a lower limit of the Mn content may be 1.4%, or an upper limit of the Mn content may be 2.4%.

Chromium (Cr): 0.1 to 5.0%

Chromium (Cr) is a ferrite stabilizing element, and is an element advantageous for lowering a low-temperature transformation initiation temperature and improving strength by securing the hardenability of welding metal. If the Cr content is less than 0.1%, a ratio of high angle grain boundaries of welding metal may decrease and it is difficult to obtain a sufficient compressive stress effect due to low-temperature transformation, and it may also be difficult to secure the sufficient strength of welding metal. On the other hand, if the Cr content exceeds 5.0%, the brittleness of welding metal increases unnecessarily in some cases, making it difficult to secure sufficient toughness, and the low-temperature transformation initiation temperature may become too low to sufficiently secure the compressive stress in the weld zone. Meanwhile, although not particularly limited, in terms of further improving the above-described effect, a lower limit of the Cr content may be 0.4%, or an upper limit of the Cr content may be 4.9%.

Molybdenum (Mo): 0.1 to 1.5%

Molybdenum (Mo) is a ferrite stabilizing element, and is an element advantageous for lowering a low-temperature transformation initiation temperature and improving strength by securing the hardenability of welding metal. If the Mo content is less than 0.1%, a ratio of high angle grain boundaries of welding metal may decrease and it may be difficult to sufficiently obtain a compressive stress effect due to low-temperature transformation, and it may also be difficult to secure the sufficient strength of welding metal. On the other hand, if the Mo content exceeds 1.5%, the toughness of welding metal may decrease in some cases, and the low-temperature transformation initiation temperature may become too low, making it impossible to sufficiently secure the compressive stress in the weld zone. Meanwhile, although not particularly limited, in terms of further improving the above-described effect, a lower limit of the Mo content may be 0.23%, or an upper limit of the Mo content may be 1.2% or 0.38%.

Phosphorous (P): 0.030% or less (excluding 0%)

Phosphorous (P) is an element which is generally mixed as an inevitable impurity, and 0% is excluded as a lower limit thereof. However, if the P content exceeds 0.030%, there may be a disadvantage in that high-temperature cracking of welding metal becomes more noticeable. Meanwhile, although not particularly limited, in terms of further improving the above-described effect, a lower limit of the P content may be 0.001%, or an upper limit of the P content may be 0.013%.

Sulfur (S): 0.030% or less (excluding 0%)

Sulfur (S) is an element which is generally mixed as an inevitable impurity, and 0% is excluded as a lower limit thereof. However, if the S content exceeds 0.030%, the toughness of welding metal deteriorates in some cases, and the surface tension of molten metal becomes insufficient during welding, causing a molten portion to flow excessively due to gravity during high-speed vertical welding, resulting in a poor shape of weld bead. Meanwhile, although not particularly limited, in terms of further improving the above-described effect, a lower limit of the S content may be 0.001%, or an upper limit of the S content may be 0.010%.

Aluminum (Al): 0.20% or less (excluding 0%)

Aluminum (Al) is a deoxidizing element that can improve the strength of welding metal by promoting the deoxidation of molten metal during arc welding even in a small amount of Al. To secure the above-described effect, 0% is excluded as a lower limit of the Al content. However, if the Al content exceeds 0.20%, the formation of Al-based oxides increases, and in some cases, the strength and toughness of welding metal may decrease and there may be a disadvantage in that the weld zone becomes susceptible to electrodeposition coating defects due to non-conductive oxides. Meanwhile, although not particularly limited, in terms of further improving the above-described effect, a lower limit of the Al content may be 0.010%, or an upper limit of the Al content may be 0.055%.

Nickel (Ni): 0.40% or less (excluding 0%)

Nickel (Ni) is an element that can improve the strength and toughness of welding metal. To ensure the above-described effect, 0% is excluded as a lower limit of Ni content. However, if the Ni content exceeds 0.40%, there may be a disadvantage of becoming sensitive to cracking, so the Ni content is set to 0.40% or less. The Ni content is more preferably 0.30% or less, more preferably 0.20% or less, and most preferably 0.10% or less. Meanwhile, although not particularly limited, in terms of further improving the above-mentioned effect, a lower limit of the Ni content may be 0.008%, or an upper limit of the Ni content may be 0.10% or 0.053%.

Titanium (Ti): 0.10% or less (excluding 0%)

Titanium (Ti) is a deoxidizing element that can improve the strength of welding metal by promoting the deoxidation of molten metal during arc welding even in a small amount of Ti. Ti also facilitates the development of acicular ferrite, which can improve toughness in a weld zone. To ensure the above-described effect, 0% is excluded as a lower limit of Ti content. However, if the Ti content exceeds 0.10%, formation of Ti-based oxides increases, and there may be a disadvantage in that the strength and toughness of welding metal decreases in some cases due to the increased formation of Ti-based oxides. Meanwhile, although not particularly limited, in terms of further improving the above-described effect, a lower limit of the Ti content may be 0.008%, or an upper limit of the Ti content may be 0.058%.

Niobium (Ni): 0.10% or less (excluding 0%)

Niobium (Ni) is an element that can improve the strength and toughness of welding metal by increasing hardenability and densifying a microstructure thereof. In addition, Nb has an effect of improving a flow of molten metal and stabilizing an arc during arc welding. To ensure the above-described effect, 0% is excluded as a lower limit of the Nb content. However, if the Nb content exceeds 0.10%, there may be a disadvantage in that a low-melting point compound may be formed at a grain boundary, making high-temperature cracking more likely to occur. Therefore, the Nb content may be set to be 0.10% or less. Meanwhile, although not particularly limited, in terms of further improving the above-mentioned effect, a lower limit of the Nb content may be 0.026%, or an upper limit of the Nb content may be 0.050%.

Although not particularly limited, according to an embodiment of the present disclosure, the welding member may optionally further include, by weight: at least one selected from the group consisting of V: 0.20% or less (including 0%), Zr: 0.10% or less (including 0%), and B: 0.01% or less (including 0%).

Vanadium (V): 0.20% or less (including 0%)

Vanadium (V) is an element that can improve the strength and toughness of welding metal by increasing hardenability and densifying the microstructure. In addition, V is also a precipitation strengthening element that can improve the strength of welding metal by generating carbonitride. However, if the V content exceeds 0.20%, there may be a disadvantage in that the toughness of welding metal is lowered in some cases due to excessive strength due to excessive precipitates. Therefore, the V content is set to be 0.20% or less. Meanwhile, although not particularly limited, in terms of further improving the above-described effect, a lower limit of the V content may be 0.001%, or an upper limit of the V content may be 0.018% or 0.009%.

Zirconium (Zr): 0.10% or less (including 0%)

Zirconium (Zr) is an element promoting deoxidation of molten metal during arc welding (deoxidizing element) and is an element advantageous in suppressing the occurrence of blowholes. However, if the Zr content exceeds 0.10%, there may be a disadvantage in that electrodeposition coatability of a weld zone deteriorates. Therefore, the Zr content is set to be 0.10% or less. Meanwhile, although not particularly limited, in terms of further improving the above-described effect, a lower limit of the Zr content may be 0.001%, or an upper limit of the Zn content may be 0.09%.

Boron (B): 0.01% or less (including 0%)

Boron (B) is an element that can improve the strength of welding metal by increasing hardenability thereof. However, if the content of B exceeds 0.01%, there may be a disadvantage in that the toughness of welding metal may deteriorate in some cases due to excessive hardenability. Therefore, the B content is set to 0.01% or less. Meanwhile, although not particularly limited, in terms of further improving the above-described effect, a lower limit of the B content may be 0.001%, or an upper limit of the B content may be 0.009%.

Alternatively, although not particularly limited, according to an embodiment of the present invention, the welding member may optionally further include, by weight: at least one selected from the group consisting of V: 0.20% or less (excluding 0%), Zr: 0.10% or less (excluding 0%), and B: 0.01% or less (excluding 0%).

In addition, although not particularly limited, according to an embodiment of the present disclosure, the welding member may optionally further include, by weight: Cu: 0.50% or less (including 0%).

Copper (Cu): 0.50% or less (including 0%)

Copper (Cu) is an element effective in improving the strength of welding metal. However, if the Cu content exceeds 0.50%, there may be a disadvantage in that cracking susceptibility of the welding metal may increase. The Cu content is more preferably 0.45% or less, more preferably 0.40% or less, and most preferably 0.30% or less. Meanwhile, in order to sufficiently obtain a strength improvement effect, 0.01% or more of Cu may be contained in the welding metal.

Alternatively, although not particularly limited, according to an embodiment of the present disclosure, the welding member may optionally further include, by weight: Cu: 0.50% or less (excluding 0%).

The remaining component of the present disclosure is iron (Fe). However, since in the common manufacturing process, unintended impurities may be inevitably incorporated from raw materials or the surrounding environment, the component may not be excluded. Since these impurities are known to any person skilled in the common manufacturing process, the entire contents thereof are not particularly mentioned in the present specification.

Meanwhile, according to the present disclosure, the weld zone may satisfy the following Relational expression 1. By satisfying the following Relational expression 1, the strength and toughness of welding metal are simultaneously improved. This is to more precisely control the microstructure of welding metal, and an effect of alloy elements varies depending on a dilution rate between a base material of a steel sheet and a wire for welding, so it has a correlation with a thickness of the base material.

$$[\text{Relational expression 1}]$$

$$0.15 \leq ([Ti]/[Nb])/t \leq 0.65$$

In Relational expression 1 above, [Ti] and [Nb] are a weight percent content of each element in parentheses for a weld zone, and t is a thickness (mm) of a base material.

Although not particularly limited, according to an embodiment of the present disclosure, the weld zone may satisfy the following Relational expression 2. By satisfying the following Relational expression 2, the strength and toughness of the above-described welding metal are further improved, and at the same time, the production of non-conductive oxides deteriorating the electrodeposition coatability of the weld zone is suppressed.

[Relational expression 2]

$$3.68 \leq ([Ti]/[Nb]) \times t/([Si]/[Mn]) \leq 17.0$$

In Relational expression 2 above, [Ti], [Nb], [Si], and [Mn] are a weight percent content of each element in parentheses for a weld zone, and t is a thickness (mm) of a base material.

Although not particularly limited, in terms of further improving the above-described effect, in Relational expression 2 above, a lower limit of the value of ([Ti]/[Nb])×t/([Si]/[Mn]) may be 4.50 (that is, the lower limit thereof may be 4.50 or more) .

In addition, although not particularly limited, according to an embodiment of the present disclosure, the weld zone of the welding member may have a microstructure including bainite; acicular ferrite; and at least one selected from the group consisting of granular ferrite, martensite, and retained austenite. By utilizing transformation of lower bainite including acicular ferrite within old austenite grains which occurs during the cooling process after welding, the microstructure of a welding metal portion may be transformed into a dense structure in which acicular ferrite and bainite are interlocked in a complex form, and by lowering the low-temperature transformation initiation temperature, a compressive residual stress in the weld zone generated through low-temperature transformation expansion may be used to offset a shrinkage-tensile stress which occurs during solidification of a molten pool or to add additional compressive stress.

Although not particularly limited, according to an embodiment of the present disclosure, a microstructure of the weld zone may have an average effective grain size of 10 $\mu$m or less (excluding 0 $\mu$m). As described above, by finely controlling a size of the average effective grain, it is possible to obtain the effect of securing relatively excellent strength and toughness of welding metal. If the average effective grain size exceeds 10 $\mu$m, it may be difficult to simultaneously secure sufficient strength and toughness of welding metal as described above.

Meanwhile, in the present disclosure, an alloy composition of the base material is not particularly limited. However, as an example, the base material may include, by weight: C: 0.04 to 0.18%, Si: 2.0% or less (including 0%), Mn: 0.5 to 3.0%, Cr: 2.0% or less (including 0%), Mo: 2.0% or less (including 0%), Al: 0.01 to 0.10%, P: 0.05% or less (excluding 0%), S: 0.05% or less (excluding 0%), with a balance of Fe and other inevitable impurities. In addition, the base material may optionally further include at least one of Ti: 0.20% or less (including 0%), Nb: 0.10% or less (including 0%), and Cu: 0.10% or less (including 0%). In addition, although not particularly limited, the base material may have a thickness of 0.8 to 4.0 mm.

In addition, although not particularly limited, the weld zone of the welding member may include, by area, 0.5 to 2.0% of retained austenite. By satisfying this requirement, an effect of simultaneously improving the strength and toughness of welding metal may be achieved. This is due to improved ductility due to transformation-induced plasticity of retained austenite during deformation, and can exhibit excellent resistance to defect occurrence even when stress is applied.

In addition, although not specifically limited, the retained austenite included in the weld zone of the welding member may have an average ratio (Ll/Ls) of a length of a major axis (Ll) to a length of a minor axis (Ls) of 8.0 to 12.0. By satisfying this requirement, an effect of further improving the strength and toughness of welding metal may be achieved. This is because the retained austenite developed in the form of an elongated film at a dense microstructure grain boundary may exhibit the transformation-induced plasticity effect described above and at the same time, the resistance to cracking in the weld zone can be improved more effectively. In this case, a method of measuring the length of the major and minor axes is not measured using a conventional method in the technical field, so that the method is not separately defined in the present specification.

In addition, in the present disclosure, a method for manufacturing a welding member is not particularly limited. However, one of the advantageous methods for manufacturing a welding member of the present disclosure is described below. For example, in manufacturing a welding member by preparing two or more base materials and then gas shielded arc welding using a wire for welding, it is preferable that the wire for welding satisfies the alloy composition described below, and the base material also satisfies the alloy composition described above.

Hereinafter, a wire for gas shielded arc welding according to an embodiment of the present disclosure will be described. First, in the wire of the present disclosure the reason for adding each component and the reason for limiting the content of each element will be explained in detail. It is important to note that the content of each element described below is based on a weight percent unless specifically mentioned.

Carbon (C): 0.05 to 0.16%

Carbon (C) is an element which is advantageous in stabilizing arc and atomizing a volume, and is also advantageous in securing hardenability. If the C content is less than 0.05%, the volume may become coarse, the arc may become unstable, an amount of spatter generated may increase, and it may be difficult to secure sufficient strength of welding metal. As the volume becomes coarse, the arc becomes unstable, an amount of spatter generated increases, and there may be disadvantages in that it becomes difficult to secure sufficient strength of welding metal. On the other hand, if the C content exceeds 0.16%, viscosity of molten metal may be lowered, resulting in a poor bead shape, and the welding metal may be excessively hardened, resulting in decreased toughness. Meanwhile, although not particularly limited, in terms of further improving the above-described effect, a lower limit of the C content may be 0.06%, or an upper limit of the C content may be 0.15%.

Silicon (Si): 0.001 to 0.2%

Silicon (Si) is an element promoting deoxidation of molten metal during arc welding (deoxidizing element) and is an element advantageous in suppressing an occurrence of blowholes. If the Si content is less than 0.001%, there may be a disadvantage in that a deoxidation effect is insufficient and blowholes are likely to occur. If the Si content exceeds 0.2%, a large amount of non-conductive slags will be generated, causing coating defects of the weld zone, and excessive deoxidation may result in insufficient surface activation of the weld zone, which may reduce the penetrability of molten metal. Meanwhile, although not particularly limited, in terms of further improving the above-described effect, a lower limit of the Si content may be 0.005%, or an upper limit of the Si content may be 0.15% or 0.10%.

Manganese (Mn): 1.0 to 2.5%

Manganese (Mn) is a deoxidizing element and is an element advantageous in suppressing an occurrence of blowholes by promoting deoxidation of molten metal during arc welding. If the Mn content is less than 1.0%, there may be a disadvantage in that a deoxidation effect is insufficient and blowholes are likely to occur. If the Mn content exceeds 2.5%, the viscosity of molten metal becomes excessively high, so that when a welding speed is fast, the molten metal cannot properly flow into a welded portion, resulting in the formation of a humping bead, making it easy for bead shape defects to occur. Meanwhile, although not particularly limited, in terms of further improving the above-described effect, a lower limit of the Mn content may be 1.6%, or an upper limit of the Mn content may be 1.9%.

Chromium (Cr): 0.4 to 6.0%

Chromium (Cr) is a ferrite stabilizing element and is an element advantageous in securing hardenability to improve the strength of welding metal. If the Cr content is less than 0.4%, it may be difficult to secure sufficient strength of welding metal. If the Cr content exceeds 6.0%, the brittleness of welding metal may increase unnecessarily, making it difficult to secure sufficient toughness. Meanwhile, although not particularly limited, in terms of further improving the above-mentioned effect, a lower limit of the Cr content may be 0.6%, or an upper limit of the Cr content may be 5.9%.

Molybdenum (Mo): 0.1 to 0.65%

Molybdenum (Mo) is a ferrite stabilizing element and is an element advantageous in securing hardenability to improve the strength of welding metal. If the Mo content is less than 0.1%, there may be a disadvantage in that it is difficult to secure the sufficient strength of welding metal, and if the Mo content exceeds 0.65%, there may be a disadvantage in that the toughness of welding metal deteriorates in some cases. Meanwhile, although not particularly limited, in terms of further improving the above-described effect, a lower limit of the Mo content may be 0.3%, or an upper limit of the Mo content may be 0.64%.

Phosphorous (P): 0.030% or less (excluding 0%)

Phosphorous (P) is an element which is generally mixed as an inevitable impurity in steel, and is also an element that is included as a normal impurity in a solid wire for arc welding. If the P content exceeds 0.030%, there may be a disadvantage in that high-temperature cracking of welding metal becomes more noticeable.

Sulfur (S): 0.030% or less (excluding 0%)

Sulfur (S) is an element that is generally mixed as an inevitable impurity in steel, and is also an element contained as a normal impurity in a solid wire for arc welding. If the S content exceeds 0.030%, the toughness of welding metal deteriorates in some cases, and a surface tension of molten metal becomes insufficient during welding, causing a molten portion to flow excessively due to gravity during high-speed vertical welding, resulting in a poor shape of weld bead.

Aluminum (Al): 0.20% or less (excluding 0%)

Aluminum (Al) is a deoxidizing element that, even in trace amounts, can improve the strength of welding metal by promoting the deoxidation of molten metal during arc welding. To secure the above-described effect, 0% is excluded as a lower limit of the Al content. However, if the Al content exceeds 0.20%, the formation of Al-based oxides increases, which in some cases reduces the strength and toughness of welding metal, and there may be a disadvantage in that the weld zone becomes susceptible to electrodeposition coating defects due to non-conductive oxides. Meanwhile, although not particularly limited, in terms of further improving the above-described effect, a lower limit of the Al content may be 0.001%, or an upper limit of the Al content may be 0.10% or 0.020%.

Titanium (Ti): 0.20% or less (excluding 0%)

Titanium (Ti) is a deoxidizing element that can improve the strength of welding metal by promoting deoxidation of molten metal during arc welding even in a small amount of Ti. In addition, Ti also facilitates the development of acicular ferrite, which can improve the toughness of a weld zone. To ensure the above-described effect, 0% is excluded as a lower limit of Ti content. However, if the Ti content exceeds 0.20%, the production of Ti-based oxide increases, which may have a disadvantage of lowering the strength and toughness of welding metal in some cases. Meanwhile, although not particularly limited, in terms of further improving the above-described effect, a lower limit of the Ti content may be 0.001%, or an upper limit of the Ti content may be 0.10% or 0.050%.

Niobium (Nb): 0.10% or less (excluding 0%)

Niobium (Nb) is an element that can improve the strength and toughness of welding metal by increasing hardenability and densifying the microstructure. In addition, Nb has an effect of improving a flow of molten metal and stabilizing arc during arc welding. To secure the above-described effect, 0% is excluded as a lower limit of the Nb content. However, if the Nb content exceeds 0.10%, there may be a disadvantage in that a low-melting point compound is formed at a grain boundary, making high-temperature cracks more likely to occur. Meanwhile, although not particularly limited, in terms of further improving the above-described effect, the lower limit of the Nb content may be 0.01%, or an upper limit of the Nb content may be 0.06%.

Niobium (Ni): 0.40% or less (excluding 0%)

Niobium (Ni) is an element that can improve the strength and toughness of welding metal. To secure the above-mentioned effect, 0% is excluded as a lower limit of a Ni content. However, if the Ni content exceeds 0.40%, there may be a disadvantage of becoming sensitive to cracking, so the Ni content is set to 0.40% or less. Meanwhile, although not particularly limited, but in terms of further improving the above-described effect, the Ni content (i.e., an upper limit of the Ni content) may be 0.30% or less, or 0.20% or less, or may be 0.10% or less. Alternatively, the lower limit of the Ni content may be 0.005%, or may be 0.01%.

According to an aspect of the present disclosure, the wire for welding may optionally further include, by weight: at least one selected from the group consisting of V: 0.20% or less (including 0%), Zr: 0.10% or less (including 0%), and B: 0.01% or less (including 0%).

Vanadium (V): 0.20% or less (including 0%)

Vanadium (V) is an element that can improve the strength and toughness of welding metal by increasing hardenability and densifying the microstructure. In addition, V is also a precipitation strengthening element that can improve the strength of welding metal by generating carbonitride. However, if a V content exceeds 0.20%, there may be a disadvantage in that the toughness of welding metal is lowered in some cases due to excessive strength due to excessive precipitates. Therefore, the V content is set to 0.20% or less. Meanwhile, although not particularly limited, in terms of further improving the above-described effect, a lower limit of the V content may be 0.001%, or an upper limit of the V content may be 0.15% or 0.10%.

Zirconium (Zr): 0.10% or less (including 0%)

Zirconium (Zr) is an element which promotes deoxidation of molten metal during arc welding (deoxidizing element) and is an element advantageous in suppressing the occurrence of blowholes. However, if the Zr content exceeds 0.10%, there may be a disadvantage in that electrodeposition coatability of a weld zone deteriorates. Therefore, the Zr content is set to 0.10% or less. Meanwhile, although not particularly limited, in terms of further improving the above-described effect, a lower limit of the Zr content may be 0.001%, or an upper limit of the Zr content may be 0.09%.

Boron (B): 0.01% or less (including 0%)

Boron (B) is an element that can improve the strength of welding metal by increasing hardenability. However, if the content of B exceeds 0.01%, there may be a disadvantage in that the toughness of welding metal deteriorates in some cases due to excessive hardenability. Therefore, the B content is set to be 0.01% or less. Meanwhile, although not particularly limited, in terms of further improving the above-described effect, a lower limit of the B content may be 0.001%, or an upper limit of the B content may be 0.009%. According to an embodiment of the present disclosure, the wire for welding may optionally further include, by weight: at least one selected from the group consisting of V: 0.20% or less (excluding 0%), Zr: 0.10% or less (excluding 0%), and B: 0.01% (excluding 0%).

In addition, according to an embodiment of the present invention, the welding wire may optionally further include, by weight: Cu: 0.50% or less (including 0%).

Copper (Cu): 0.50% or less (including 0%)

Copper (Cu) is generally contained as an impurity in steel, and is generally contained in an amount of about 0.02%, but in the case of a solid wire for arc welding, a Cu content may be determined mainly due to copper plating performed on a surface of the wire. Cu is an element that can stabilize feedability and conductivity of the wire. However, if the Cu content exceeds 0.50%, there may be a disadvantage in that cracking susceptibility of the welding metal increases. The Cu content is more preferably 0.45% or less, more preferably 0.40% or less, and most preferably 0.30% or less.

Alternatively, according to an embodiment of the present disclosure, the wire for welding may optionally further include, by weight: Cu: 0.50% or less (excluding 0%).

The remaining component of the present disclosure is iron (Fe). However, since in the common manufacturing process, unintended impurities may be inevitably incorporated from raw materials or the surrounding environment, the component may not be excluded. Since these impurities are known to any person skilled in the common manufacturing process, the entire contents thereof are not particularly mentioned in the present specification.

Meanwhile, according to the present disclosure, the wire for welding can satisfy the following Relational expression 3. By satisfying the following Relational expression 3, the strength and toughness of the above-described welding metal are improved and the formation of non-conductive oxides which deteriorate the electrodeposition coating properties of a weld zone is suppressed.

$$490 \le 732 - 202\times[C] + 216\times[Si] - 85\times[Mn] - 37\times[Ni] - 47\times[Cr] - 39\times[Mo] \le 520 \qquad \text{[Relational expression 3]}$$

In Relational expression 3 above, [C], [Si], [Mn], [Ni], [Cr], and [Mo] are a weight percent content of each element in parentheses for a wire for welding.

Meanwhile, in Relational expression 3 above, it is preferable to control a value of '732 - 202 × [C] + 216 × [Si] - 85 × [Mn] - 37 × [Ni] - 47 × [Cr] - 39 × [Mo]' (that is, the value of R below) to 495 or more and 515 or less, and it is more preferable to control the value to 500 or more and 510 or less.

$$R = 732 - 202\times[C] + 216\times[Si] - 85\times[Mn] - 37\times[Ni] - 47\times[Cr] - 39\times[Mo]$$

$$500 \le 732 - 202\times[C] + 216\times[Si] - 85\times[Mn] - 37\times[Ni] - 47\times[Cr] - 39\times[Mo] \le 510 \qquad \text{[Relational expression 3-2]}$$

Although not particularly limited, according to an embodiment of the present disclosure, the wire for welding may satisfy the following Relational expression 3-2, and by satisfying this, the effect secured through the above-described Relational expression 3 can be optimized.

Although not particularly limited, according to an embodiment of the present disclosure, the wire for welding may satisfy the following Relational expression 4. By satisfying the following Relational expression 4, the microstructure of welding metal described above is controlled more precisely, thereby improving the strength and toughness of the weld zone at the same time.

$$\text{[Relational expression 4]}$$

$$Ti + Nb \ge 0.04$$

In the Relational expression 4 above, [Ti] and [Nb] are a weight percent content of each element in parentheses for a wire for welding.

Mode for Invention

Hereinafter, the present disclosure will be specifically described through the following Examples. However, it should be noted that the following examples are only for describing the present disclosure by illustration, and not intended to limit the right scope of the present disclosure. The reason is that the right scope of the present disclosure is determined by the matters described in the claims and reasonably inferred therefrom.

(Example)

Two steel sheets with a tensile strength of 980 MPa or more or 1,180 MPa or more having the alloy composition and thickness shown in Table 1 below were prepared as a base material. In addition, a wire for gas shielded arc welding having the alloy composition shown in Table 2 below was prepared. Thereafter, gas shield arc welding was performed while applying the welding heat input shown in Table 4 below to manufacture a welding member having a weld zone having the alloy composition shown in Table 3 below. In this case, for each weld zone formed by the welding, a microstructure of the weld zone in a cross-sectional portion thereof, perpendicular to a longitudinal direction in a central portion of the weld zone in the longitudinal direction was observed with an optical microscope to confirm a region of welding metal in advance, and the region was cut into a shape of fine chips. Thereafter, with each chip sample, a chemical composition of the welding metal was measured through emission spectrometry using high-frequency inductively coupled plasma (ICP) .

A microstructure, strength, and toughness of the weld zone were measured for the welding member manufactured in this manner, and the results thereof were shown in Tables 4 and 5 below. In this case, a micro-tensile specimen with a width of 1. 6 mm, a length of 20 mm, and a thickness of 0.5 mm was processed in the central portion of the weld zone to measure the strength of welding metal through a tensile test. In addition, for the measurement of the toughness of the weld zone, a butt welded joint was prepared by using the steel sheet and the wire for gas shielded arc welding described above, and a V-notch impact specimen with a specimen length of 55 mm was processed according to the JIS Z 2242 standard and prepared. The V-notch was located in the center of the welding metal, and impact absorption energy was measured through an impact test at -40°C. In this case, each test was performed three times per specimen, and the average value was taken as the measured value.

For the microstructure, a specimen was collected from the weld zone, a cross-sectional structure was finely ground, etched with a Nital solution, and observed with an optical microscope. In addition, Kikuchi patterns were analyzed through EBSD (Electron Backscattered Diffraction) to obtain IQ (Image Quality) and IPF (Inverse Pole Figure) Maps visualizing a grain boundary and grain orientation information. Thereafter, the grains were classified by referring the IQ and IPF Map of EBSD along with the microstructure image observed with the optical microscope described above, and then an average effective grains size was measured by calculating the average size of the grains converted from the number of grains per unit area.

In addition, by applying the same observation method as described above, in the case of a fraction of retained austenite (RA), a ratio of a total area of retained austenite distributed in a welding metal observation area to a total area of the observation area was measured for each of 10 areas of the welding metal, and then the average value was calculated. In the case of an average ratio (Ll/Ls) of a length of a major axis (L1) to a length of a minor axis (Ls) of retained austenite, for the welding metal observation area described above, the length of the minor axis and the length of the major axis of retained austenite were measured for 100 random pieces of retained austenite, and the average value thereof were calculated and shown in Table 4 below.

[Table 1]

| Base material No. | Thickness (mm) | Base material | Alloy composition of base material(weight %) | | | | | | | | | |
| | | Tensile strength (MPa) | C | Si | Mn | Cr | Mo | Al | P | S | Ti | Cu | Remainder |
| 1 | 2.0 | 980 | 0.09 | 0.9 | 2.0 | 0.2 | 0.2 | 0.025 | 0.009 | 0.001 | 0.08 | 0.02 | Fe |
| 2 | 1.6 | 1180 | 0.17 | 1.5 | 2.6 | 0.3 | - | 0.020 | 0.010 | 0.003 | 0.02 | - | Fe |
| 3 | 2.0 | 1180 | 0.15 | 0.4 | 2.9 | 0.2 | - | 0.090 | 0.008 | 0.002 | 0.02 | - | Fe |

In Table 1 above, '-' indicates that the content of the corresponding element is 0%.

[Table 2]

| No. | C | Si | Mn | Cr | Mo | Al | P | S | Ni | Ti | Nb | V | Relational expression 3 | Relational expression 4 |
|---|---|---|---|---|---|---|---|---|---|---|---|---|---|---|
| 1 | 0.07 | 0.07 | 1.70 | 1.44 | 0.51 | 0.001 | 0.014 | 0.0 06 | 0.01 | 0.00 2 | 0.04 | 0.00 2 | 501 | 0.04 |
| 2 | 0.07 | 0.06 | 1.60 | 1.40 | 0.51 | 0.003 | 0.011 | 0.0 04 | 0.02 | - | - | - | 508 | 0.00 |
| 3 | 0.07 | 0.37 | 1.65 | 0.50 | 0.30 | 0.006 | 0.011 | 0.0 06 | 3.00 | 0.04 0 | - | 0.00 1 | 511 | 0.04 |
| 4 | 0.08 | 0.09 | 1.70 | 1.40 | 0.53 | 0.020 | 0.009 | 0.0 05 | 0.01 | 0.03 5 | 0.06 | 0.00 1 | 504 | 0.10 |
| 5 | 0.06 | 0.09 | 1.65 | 1.30 | 0.45 | 0.009 | 0.008 | 0.0 07 | 0.01 | 0.05 0 | 0.03 | 0.00 2 | 520 | 0.08 |
| 6 | 0.08 | 0.08 | 1.75 | 1.47 | 0.55 | 0.012 | 0.012 | 0.0 08 | 0.10 | 0.04 0 | 0.05 | 0.00 1 | 490 | 0.09 |
| 7 | 0.08 | 0.29 | 1.75 | 1.47 | 0.55 | 0.020 | 0.010 | 0.0 04 | 0.10 | - | 0.05 | 0.00 1 | 536 | 0.05 |

In Table 2 above, '-' indicates that the content of the corresponding element is 0%.

[Table 3]

| Welding member No. | Base material No. | Wire No. | Alloy composition in weld zone (weight %); balance of Fe and impurities | | | | | | | | | | | | Relational expression 1 | Relational expression 2 |
|---|---|---|---|---|---|---|---|---|---|---|---|---|---|---|---|---|
| | | | C | Si | Mn | Cr | Mo | Al | P | S | Ni | Ti | Nb | V | | |
| Inventive Example 1 | 1 | 1 | 0.075 | 0.59 | 1.85 | 0.73 | 0.31 | 0.016 | 0.012 | 0.03 | 0.010 | 0.041 | 0.038 | 0.04 | 0.54 | 6.80 |
| Comparative Example 1 | 1 | 2 | 0.079 | 0.56 | 1.83 | 0.70 | 0.30 | 0.012 | 0.011 | 0.04 | 0.010 | 0.036 | 0.010 | 0.04 | 1.80 | 23.5 |
| Comparative Example 2 | 1 | 3 | 0.080 | 0.72 | 1.83 | 0.34 | 0.23 | 0.013 | 0.010 | 0.05 | 1.442 | 0.060 | 0.010 | 0.04 | 3.00 | 30.5 |
| Inventive Example 2 | 1 | 4 | 0.085 | 0.63 | 1.84 | 0.71 | 0.32 | 0.022 | 0.009 | 0.03 | 0.010 | 0.058 | 0.050 | 0.01 | 0.58 | 6.80 |
| Inventive Example 3 | 2 | 1 | 0.120 | 0.28 | 2.30 | 0.73 | 0.32 | 0.010 | 0.015 | 0.03 | 0.008 | 0.012 | 0.035 | 0.02 | 0.21 | 4.50 |
| Comparative Example 3 | 2 | 2 | 0.120 | 0.22 | 2.20 | 0.64 | 0.35 | 0.012 | 0.011 | 0.04 | 0.011 | 0.010 | 0.009 | 0.02 | 0.69 | 17.8 |
| Comparative Example 4 | 2 | 3 | 0.110 | 0.37 | 2.20 | 0.30 | 0.23 | 0.013 | 0.010 | 0.04 | 1.130 | 0.030 | 0.016 | 0.02 | 1.17 | 17.8 |
| Inventive Example 4 | 2 | 4 | 0.130 | 0.30 | 2.30 | 0.65 | 0.37 | 0.020 | 0.010 | 0.04 | 0.010 | 0.028 | 0.027 | 0.01 | 0.65 | 12.7 |
| Inventive Example 5 | 3 | 1 | 0.120 | 0.22 | 2.16 | 0.73 | 0.33 | 0.029 | 0.013 | 0.04 | 0.008 | 0.008 | 0.026 | 0.02 | 0.15 | 6.04 |
| Comparative Example 5 | 3 | 2 | 0.120 | 0.20 | 2.13 | 0.73 | 0.33 | 0.031 | 0.012 | 0.04 | 0.011 | 0.008 | 0.005 | 0.02 | 0.80 | 34.1 |
| Comparative Example 6 | 3 | 3 | 0.110 | 0.37 | 2.08 | 0.32 | 0.23 | 0.034 | 0.012 | 0.05 | 1.461 | 0.032 | 0.016 | 0.02 | 1.00 | 22.5 |
| Inventive Example 6 | 3 | 4 | 0.130 | 0.24 | 2.18 | 0.72 | 0.35 | 0.055 | 0.010 | 0.04 | 0.010 | 0.030 | 0.032 | 0.01 | 0.47 | 17.0 |
| Inventive Example 7 | 1 | 5 | 0.075 | 0.50 | 1.83 | 0.76 | 0.33 | 0.017 | 0.009 | 0.04 | 0.010 | 0.045 | 0.035 | 0.01 | 0.64 | 9.41 |

(continued)

| Welding member No. | Base material No. | Wire No. | Alloy composition in weld zone (weight %); balance of Fe and impurities | | | | | | | | | | | | Relational expression 1 | Relational expression 2 |
|---|---|---|---|---|---|---|---|---|---|---|---|---|---|---|---|---|
| | | | C | Si | Mn | Cr | Mo | Al | P | S | Ni | Ti | Nb | V | | |
| Inventive Example 8 | 1 | 6 | 0.085 | 0.49 | 1.88 | 0.84 | 0.38 | 0.019 | 0.011 | 0.005 | 0.050 | 0.044 | 0.034 | 0.002 | 0.65 | 9.93 |
| Inventive Example 9 | 2 | 5 | 0.115 | 0.80 | 2.13 | 0.81 | 0.23 | 0.015 | 0.009 | 0.005 | 0.008 | 0.035 | 0.037 | 0.001 | 0.59 | 4.03 |
| Inventive Example 10 | 2 | 6 | 0.125 | 0.79 | 2.18 | 0.89 | 0.28 | 0.016 | 0.011 | 0.006 | 0.047 | 0.030 | 0.036 | 0.003 | 0.52 | 3.68 |
| Inventive Example 11 | 3 | 5 | 0.105 | 0.25 | 2.28 | 0.76 | 0.24 | 0.050 | 0.008 | 0.005 | 0.012 | 0.034 | 0.038 | 0.002 | 0.45 | 16.3 |
| Inventive Example 12 | 3 | 6 | 0.115 | 0.24 | 2.32 | 0.84 | 0.27 | 0.051 | 0.010 | 0.005 | 0.053 | 0.029 | 0.033 | 0.001 | 0.44 | 17.0 |
| Comparative Example 7 | 3 | 7 | 0.115 | 0.34 | 2.33 | 0.84 | 0.27 | 0.055 | 0.009 | 0.003 | 0.05 | 0.006 | 0.024 | 0.001 | 0.13 | 3.43 |

[Table 4]

| Welding member No. | Thickness of base material (T) (mm) | Heat input (Q) (kJ/cm) | Microstructure | Average effective grain size (G) ($\mu$m) | RA fraction (area %) | Average ratio (Ll/Ls) of a length of major axis (Ll) to a length of minor axis (Ls) of retained austenite |
|---|---|---|---|---|---|---|
| Inventiv e Example 1 | 2.0 | 2.4 | AF+B+M+R A | 4.3 | 2.0 | 11.8 |
| Comparat ive Example 1 | 2.0 | 2.3 | AF+B+M+R A | 5.2 | 0.4 | 7.4 |
| Comparat ive Example 2 | 2.0 | 2.4 | AF+B+M+R A | 4.4 | 0.3 | 6.7 |
| Inventiv e Example 2 | 2.0 | 2.3 | AF+B+M+R A | 4.0 | 1.6 | 11.2 |
| Inventiv e Example 3 | 1.6 | 1.7 | AF+B+M+R A | 2.7 | 1.0 | 12.0 |
| Comparat ive Example 3 | 1.6 | 1.6 | AF+B+M | 4.5 | - | - |
| Comparat ive Example 4 | 1.6 | 1.7 | AF+B+M | 3.6 | - | - |
| Inventiv e Example 4 | 1.6 | 1.7 | AF+B+M+R A | 2.4 | 0.9 | 10.5 |
| Inventiv e Example 5 | 2.0 | 2.1 | B+M+RA | 5.2 | 0.9 | 9.6 |
| Comparat ive Example 5 | 2.0 | 2.2 | B+M | 5.8 | - | - |
| Comparat ive Example 6 | 2.0 | 2.2 | B+M | 6.0 | - | - |
| Inventiv e Example 6 | 2.0 | 2.2 | B+M+RA | 5.0 | 0.5 | 8.0 |
| Inventiv e Example 7 | 2.0 | 2.4 | AF+B+M+R A | 4.5 | 1.8 | 11.6 |
| Inventiv e Example 8 | 2.0 | 2.3 | AF+B+M+R A | 4.3 | 1.4 | 11.0 |
| Inventiv e Example 9 | 1.6 | 1.7 | AF+B+M+R A | 2.8 | 0.8 | 10.8 |
| Inventiv e Example 10 | 1.6 | 1.7 | AF+B+M+R A | 2.5 | 0.6 | 10.2 |
| Inventiv e Example 11 | 2.0 | 2.1 | B+M+RA | 5.4 | 0.7 | 9.4 |
| Inventiv e Example 12 | 2.0 | 2.2 | B+M+RA | 5.1 | 0.5 | 8.3 |
| Comparat ive Example 7 | 2.0 | 2.1 | B+M+RA | 5.9 | 0.1 | 4.7 |

AF: Acicular Ferrite, B: Bainite, M: Martensite, RA: Retained Austenite

A welding heat input Q (kJ/cm) is calculated by the formula Q = (I $\times$ E) $\times$ 0.048 /u, where I is a welding current (A), E is a welding voltage (V), and u is a welding speed (cm /min) .

In Table 2 above, '-' indicates that the content of the corresponding element is 0%.

[Table 5]

| Welding member No. | Strength (MPa) | Toughness (J) |
|---|---|---|
| Inventive Example 1 | 1050 | 22.7 |
| Comparative Example 1 | 1005 | 18.2 |
| Comparative Example 2 | 990 | 17.4 |
| Inventive Example 2 | 1075 | 20.5 |
| Inventive Example 3 | 1180 | 21.8 |
| Comparative Example 3 | 1050 | 19.2 |
| Comparative Example 4 | 1025 | 16.5 |
| Inventive Example 4 | 1200 | 20.4 |
| Inventive Example 5 | 1150 | 20.3 |
| Comparative Example 5 | 1020 | 17.8 |

(continued)

| Welding member No. | Strength (MPa) | Toughness (J) |
|---|---|---|
| Comparative Example 6 | 1000 | 16.5 |
| Inventive Example 6 | 1201 | 20.1 |
| Inventive Example 7 | 1048 | 22.5 |
| Inventive Example 8 | 1072 | 21.3 |
| Inventive Example 9 | 1182 | 20.8 |
| Inventive Example 10 | 1196 | 20.5 |
| Inventive Example 11 | 1152 | 20.2 |
| Inventive Example 12 | 1203 | 20.0 |
| Comparative Example 7 | 997 | 15.3 |

As can be seen from the experimental results in Table 5 above, in the case of Inventive Examples 1 to 12 satisfying a weld zone composition range and Relational expression 1 (or Relational expressions 1 and 2) of the present disclosure and satisfying a wire composition range and Relational expression 3 (or Relational expressions 3 and 4), it was confirmed that the strength and toughness of the weld zone were both excellent.

On the other hand, in the case of Comparative Examples 1 to 7 not satisfying at least one of the weld zone composition range and Relational expression 1 (or Relational expressions 1 and 2) of the present disclosure, and not satisfying at least one of the wire composition range and Relational expressions 3 (or Relational expressions 3 and 4) of the present disclosure, it was confirmed that at least one of the strength and toughness characteristics of the weld zone was inferior.

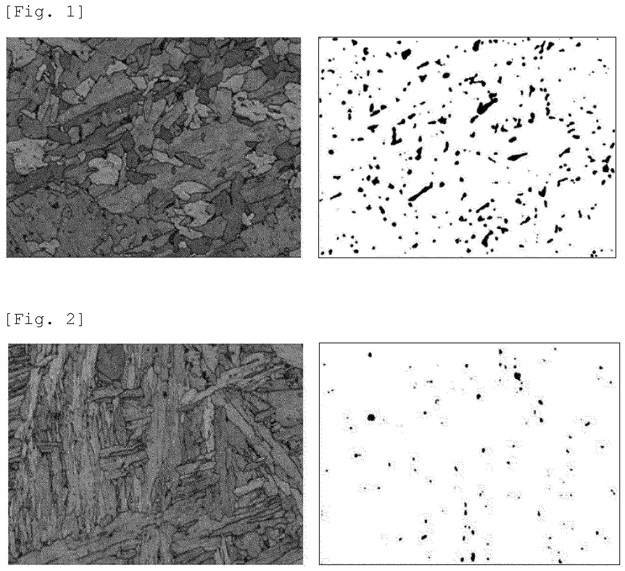

In particular, FIG. 1 is an Image Quality (IQ) and Inverse Pole Figure (IPF) photograph of Invention Example 1 observed with EBSD, and a black colored portion (i.e., a black portion on a right side of FIG. 1) represents retained austenite.

In addition, FIG. 2 is an Image Quality (IQ) and Inverse Pole Figure (IPF) photograph observed with EBSD of Comparative Example 2, and a black colored portion (i.e., a black portion on a right side of FIG. 2) represents retained austenite.

**Claims**

1.  A welding member, comprising:

    a base material; and a weld zone,
    wherein the weld zone includes, by weight:

    C: 0.05 to 0.16%, Si: 0.001 to 1.0%, Mn: 1.0 to 2.5%, Cr: 0.1 to 5.0%, Mo: 0.1 to 1.5%, P: 0.030% or less (excluding 0%), S: 0.030% or less (excluding 0%), Al: 0.20% or less (excluding 0%), Ni: 0.40% or less (excluding 0%), Ti: 0.10% or less (excluding 0%), Nb: 0.10% or less (excluding 0%), with a balance of Fe and other inevitable impurities, wherein the following relational expression 1 is satisfied,

    [Relational expression 1]

    $$0.15 \leq ([Ti]/[Nb])/t \leq 0.65$$

    in relational expression 1 above, [Ti] and [Nb] are a weight percent content of each element in parentheses for the weld zone, and t is a thickness (mm) of the base material.

2.  The welding member of claim 1, wherein the weld zone satisfies the following relational expression 2,

[Relational expression 2]

$$3.68 \leq ([Ti]/[Nb]) \times t/([Si]/[Mn]) \leq 17.0$$

In relational expression 2 above, [Ti], [Nb], [Si], and [Mn] are a weight percent content of each element in parentheses for the weld zone, and t is a thickness (mm) of the base material.

3. The welding member of claim 1, wherein the weld zone further comprises, by weight:
at least one of V: 0.20% or less (including 0%), Zr: 0.10% or less (including 0%), and B: 0.01% or less (including 0%).

4. The welding member of claim 1, wherein the weld zone further comprises, by weight:
Cu: 0.50% or less (including 0%).

5. The welding member of claim 1, wherein the weld zone comprises, as a microstructure,

Bainite;
acicular ferrite; and
at least one selected from the group consisting of granular ferrite, martensite, and retained austenite.

6. The welding member of claim 1, wherein the microstructure of the weld zone has an average effective grain size of 10 $\mu$m or less (excluding 0 $\mu$m).

7. The welding member of claim 1, wherein the weld zone comprises, by area, 0.5 to 2.0% of retained austenite.

8. The welding member of claim 1, wherein the retained austenite included in the weld zone has an average ratio (Ll/Ls) of a length of a major axis (Ll) to a length of a minor axis (Ls) of 8.0 to 12.0.

9. The welding member of claim 1, wherein the base material comprises, by weight:
C: 0.04 to 0.18%, Si: 2.0% or less (including 0%), Mn: 0.5 to 3.0%, Cr: 2.0% or less (including 0%), Mo: 2.0% or less (including 0%), Al: 0.01 to 0.10%, P: 0.05% or less (excluding 0%), S: 0.05% or less (excluding 0%), with a balance of Fe and other inevitable impurities.

10. The welding member of claim 9, wherein the base material further comprises, by weight:
at least one of Ti: 0.20% or less (including 0%), Nb: 0.10% or less (including 0%), and Cu: 0.10% or less (including 0%).

11. A wire for gas shielded arc welding, comprising by weight:

C: 0.05 to 0.16%, Si: 0.001 to 0.2%, Mn: 1.0 to 2.5%, Cr: 0.4 to 6.0%, Mo: 0.1 to 0.65%, P: 0.030% or less (excluding 0%), S: 0.030% or less (excluding 0%), Al: 0.20% or less (excluding 0%), Ni: 0.40% or less (excluding 0%), Ti: 0.20% or less (excluding 0%), Nb : 0.10% or less (excluding 0%), with a balance of Fe and other inevitable impurities, wherein the following relational expression 3 is satisfied,

$490 \leq 732 - 202 \times [C] + 216 \times [Si] - 85 \times [Mn] - 37 \times [Ni] - 47 \times [Cr] - 39 \times [Mo] \leq 520$    [Relational expression 3]

in relational expression 3 above, [C], [Si], [Mn], [Ni], [Cr], and [Mo] are a weight percent content of each element in parentheses for the wire for gas shielded welding.

12. The wire for gas shielded arc welding of claim 11, wherein the following relational expression 4 is further satisfied,

[Relational expression 4]

$$Ti+Nb \geq 0.04$$

in relational expression 4 above, [Ti] and [Nb] are a weight percent content of each element in parentheses for the wire for gas shielded welding.

**13.** The wire for gas shielded arc welding of claim 11, wherein the wire for gas shielded welding further comprises, by weight:
at least one of V: 0.20% or less (including 0%), Zr: 0.10% or less (including 0%), and B: 0.01% or less (including 0%).

**14.** The wire for gas shielded arc welding of claim 11, wherein the wire for gas shielded welding further comprises, by weight:
Cu: 0.50% or less (including 0%).

**15.** An automotive component having the weld zone of claim 1.

[Fig. 1]

[Fig. 2]

## INTERNATIONAL SEARCH REPORT

| International application No. |
|---|
| **PCT/KR2023/018810** |

| A. | CLASSIFICATION OF SUBJECT MATTER |
|---|---|

**B23K 35/30**(2006.01)i; **B23K 35/02**(2006.01)i; **B23K 9/29**(2006.01)i

According to International Patent Classification (IPC) or to both national classification and IPC

| B. | FIELDS SEARCHED |
|---|---|

Minimum documentation searched (classification system followed by classification symbols)

B23K 35/30(2006.01); B23K 35/02(2006.01); B23K 9/02(2006.01); B23K 9/16(2006.01); B23K 9/173(2006.01); B23K 9/23(2006.01); C22C 38/00(2006.01); C22C 38/58(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 용접(welding), 탄소(C), 실리콘(Si), 망간(Mn), 크롬(Cr), 몰리브덴(Mo), 알루미늄(Al), 니켈(Ni), 티타늄(Ti), 니오븀(Nb)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2019-0103244 A (NIPPON STEEL CORPORATION) 04 September 2019 (2019-09-04)<br>See paragraphs [0049], [0108] and [0128], claims 1 and 3-7 and figure 1. | 1-10,15 |
| X | KR 10-2012-0099534 A (NIPPON STEEL CORPORATION) 10 September 2012 (2012-09-10)<br>See claim 3. | 11-14 |
| X | KR 10-2021-0133279 A (NIPPON STEEL CORPORATION) 05 November 2021 (2021-11-05)<br>See paragraph [0062], claims 1-3 and figures 1 and 2. | 1-8,15 |
| X | JP 2013-204103 A (JFE STEEL CORP.) 07 October 2013 (2013-10-07)<br>See paragraphs [0012], [0024] and [0049]-[0050] and claim 1. | 1,15 |
| X | JP 2022-102850 A (NIPPON STEEL WELDING & ENGINEERING CO., LTD.) 07 July 2022 (2022-07-07)<br>See claims 1-2. | 11 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 February 2024** | **27 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| | International application No. |
|---|---|
| | **PCT/KR2023/018810** |

**C.    DOCUMENTS CONSIDERED TO BE RELEVANT**

| Category* | Citation of document, with indication, where appropriate, of the relevant passages | Relevant to claim No. |
|---|---|---|
| A | JP 2009-226476 A (NIPPON STEEL CORP.) 08 October 2009 (2009-10-08)<br>    See claims 1 and 5-7. | 1-15 |
| A | KR 10-2015-0136551 A (NIPPON STEEL & SUMITOMO METAL CORPORATION) 07 December 2015 (2015-12-07)<br>    See claim 1. | 1-15 |

Form PCT/ISA/210 (second sheet) (July 2022)

**INTERNATIONAL SEARCH REPORT**
Information on patent family members

International application No.

**PCT/KR2023/018810**

| Patent document cited in search report | | | Publication date (day/month/year) | Patent family member(s) | | | Publication date (day/month/year) |
|---|---|---|---|---|---|---|---|
| KR | 10-2019-0103244 | A | 04 September 2019 | CN | 110382154 | A | 25 October 2019 |
| | | | | CN | 110382154 | B | 22 June 2021 |
| | | | | EP | 3590644 | A1 | 08 January 2020 |
| | | | | EP | 3590644 | B1 | 11 January 2023 |
| | | | | JP | 6432716 | B1 | 05 December 2018 |
| | | | | JP | WO2018-159719 | A1 | 07 March 2019 |
| | | | | MX | 2019010128 | A | 02 October 2019 |
| | | | | US | 11235415 | B2 | 01 February 2022 |
| | | | | US | 2019-0388995 | A1 | 26 December 2019 |
| | | | | WO | 2018-159719 | A1 | 07 September 2018 |
| KR | 10-2012-0099534 | A | 10 September 2012 | CN | 102753300 | A | 24 October 2012 |
| | | | | CN | 102753300 | B | 30 April 2014 |
| | | | | EP | 2567776 | A1 | 13 March 2013 |
| | | | | EP | 2567776 | B1 | 21 January 2015 |
| | | | | JP | 4903918 | B1 | 28 March 2012 |
| | | | | JP | WO2011-155620 | A1 | 15 August 2013 |
| | | | | US | 2013-0078031 | A1 | 28 March 2013 |
| | | | | US | 8758901 | B2 | 24 June 2014 |
| | | | | WO | 2011-155620 | A1 | 15 December 2011 |
| KR | 10-2021-0133279 | A | 05 November 2021 | CN | 113677817 | A | 19 November 2021 |
| | | | | CN | 113677817 | B | 09 December 2022 |
| | | | | EP | 3950995 | A1 | 09 February 2022 |
| | | | | EP | 3950995 | B1 | 10 January 2024 |
| | | | | JP | 7143937 | B2 | 29 September 2022 |
| | | | | JP | WO2020-196869 | A1 | 01 October 2020 |
| | | | | MX | 2021011510 | A | 22 October 2021 |
| | | | | US | 2022-0154319 | A1 | 19 May 2022 |
| | | | | WO | 2020-196869 | A1 | 01 October 2020 |
| JP | 2013-204103 | A | 07 October 2013 | None | | | |
| JP | 2022-102850 | A | 07 July 2022 | None | | | |
| JP | 2009-226476 | A | 08 October 2009 | JP | 5163215 | B2 | 13 March 2013 |
| KR | 10-2015-0136551 | A | 07 December 2015 | AU | 2014-345139 | A1 | 17 December 2015 |
| | | | | AU | 2014-345139 | B2 | 31 March 2016 |
| | | | | BR | 112015029349 | A2 | 25 July 2017 |
| | | | | BR | 112015029349 | B1 | 08 December 2020 |
| | | | | CA | 2915026 | A1 | 14 May 2015 |
| | | | | CA | 2915026 | C | 04 October 2016 |
| | | | | CA | 2926569 | A1 | 14 May 2015 |
| | | | | CA | 2926569 | C | 18 April 2017 |
| | | | | CN | 105339132 | A | 17 February 2016 |
| | | | | CN | 105339132 | B | 12 April 2017 |
| | | | | JP | 5696824 | B1 | 08 April 2015 |
| | | | | JP | WO2015-068443 | A1 | 09 March 2017 |
| | | | | MX | 2015017087 | A | 11 April 2016 |
| | | | | MX | 352525 | B | 29 November 2017 |
| | | | | MY | 158148 | A | 15 September 2016 |
| | | | | PH | 12015502625 | A1 | 07 March 2016 |
| | | | | PH | 12015502625 | B1 | 07 March 2016 |
| | | | | WO | 2015-068261 | A1 | 14 May 2015 |

Form PCT/ISA/210 (patent family annex) (July 2022)

INTERNATIONAL SEARCH REPORT
Information on patent family members

| International application No. |
| PCT/KR2023/018810 |

| Patent document cited in search report | Publication date (day/month/year) | Patent family member(s) | Publication date (day/month/year) |
|---|---|---|---|
| | | WO 2015-068443 A1 | 14 May 2015 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013220431 A